# EUROPÄISCHE PATENTSCHRIFT

(11) **EP 4 004 490 B1**
(45) Veröffentlichungstag und Bekanntmachung des Hinweises auf die Patenterteilung: **08.02.2023**
(21) Anmeldenummer: 20824508.4
(22) Anmeldetag: 10.12.2020
(51) Int. Cl.: G01C 21/00, G01C 21/32

(54) **VERFAHREN UND PROZESSORSCHALTUNG ZUM AKTUALISIEREN EINER DIGITALEN STRASSENKARTE**
METHOD AND PROCESSOR CIRCUIT FOR UPDATING A DIGITAL ROAD MAP
PROCÉDÉ ET CIRCUIT DE TRAITEMENT PERMETTANT DE METTRE À JOUR UNE CARTE ROUTIÈRE NUMÉRIQUE

(30) Priorität: 14.02.2020 DE 102020103906
(43) Veröffentlichungstag der Anmeldung: 01.06.2022
(73) Patentinhaber: Audi AG, 85045 Ingolstadt (DE)
(72) Erfinder: SEITLE, Simon, 86633 Neuburg (DE); JANDER, Andreas, 85053 Ingolstadt (DE); HENKENHAF, Florian, 85049 Ingolstadt (DE)
(86) Internationale Anmeldenummer: PCT/EP2020/085403
(87) Internationale Veröffentlichungsnummer: WO 2021/160319

(56) Entgegenhaltungen:
- WO-A1-2017/100797
- WO-A1-2019/152049
- US-A1- 2018 003 512
- US-B1- 6 356 836

## Beschreibung

Die Erfindung betrifft ein Verfahren zum Aktualisieren einer digitalen Straßenkarte, in der zumindest eine Straße kartographiert ist, wobei entlang eines Verlaufs der zumindest einen kartographierten Straße ortsaufgelöste Beschreibungswerte zumindest einer kartographierten Umgebungseigenschaft, beispielsweise einer Umgebungstemperatur oder einer Straßenbeschaffenheit, enthalten sind. Die Erfindung sieht auch eine Prozessorschaltung vor, mittels welcher das Verfahren durchgeführt werden kann.

Um eine digitale Straßenkarte zu entwerfen, können Messungen aus mehreren Kraftfahrzeugen genutzt werden, die in einer Umgebung entlang der dort befindlichen Straßen fahren und Messwerte zu unterschiedlichen Umgebungseigenschaften, wie beispielsweise der besagten Umgebungstemperatur oder Straßenbeschaffenheit, messen. Für jedes Kraftfahrzeug ergeben sich somit Messdaten, die logisch aneinandergereihte oder verkettete Datensätze darstellen. Denn jeder Datensatz gibt zu einer bestimmten Geoposition an, welcher Messwert dort zu der jeweils zu vermessenden Umgebungseigenschaft gemessen wurde. Die Verkettung der Datensätze ergibt sich also durch die zeitliche Reihenfolge, in der die Geopositionen während der jeweiligen Fahrt passiert wurden. Der verkettete Datensatz entspricht somit der gefahrenen Trajektorie, entlang welcher das Kraftfahrzeug auf seiner jeweiligen Fahrt gefahren ist. Im Folgenden werden Messdaten, die als logisch verkettete Datensätze für unterschiedliche Geopositionen Messwerte angeben, auch als "Graph" bezeichnet, da die Darstellungsweise der Messdaten dem mathematischen Graphen aus Knoten und Kanten entspricht.

Eine zentrale Prozessorschaltung, beispielsweise ein Internetserver, kann aus mehreren Kraftfahrzeugen zu einer Fahrt deren jeweiligen Graphen aus verketteten Datensätzen empfangen, so dass in der Prozessorschaltung für jedes Kraftfahrzeug zu einer jeweiligen Fahrt der verkettete Datensatz vorliegt, der für die entlang einer Trajektorie an unterschiedlichen Geopositionen gemessenen Messwerte beschreibt. Fahren mehrere Kraftfahrzeuge entlang derselben Straße, so liegen also zu dieser Straße mehrere Graphen verketteter Datensätze vor. Die Messwerte der unterschiedlichen Kraftfahrzeuge können voneinander abweichen, weil beispielsweise Sensoren unterschiedlicher Qualität (Streuung) und/oder unterschiedliche Messbedinungen vorgelegen haben. Mit an sich bekannten Algorithmen lassen sich die Graphen der verketteten Datensätze unterschiedlicher Kraftfahrzeuge oder allgemein unterschiedlicher Fahrten (von demselben oder unterschiedlichen Kraftfahrzeugen) zusammenfassen. Die hierdurch zusammengefassten Messwerte werden im Folgenden als Beschreibungswerte bezeichnet. Diese werden in der Straßenkarte eingetragen, um für unterschiedliche Geopositionen die zu vermessende oder kartographierende Umgebungseigenschaft ortsaufgelöst zu beschreiben.

Kommen allerdings dann neue verkettete Datensätze hinzu, so ist man heute nicht in der Lage, diese neuen Messdaten nachträglich in eine fertige digitale Straßenkarte zu integrieren. Deshalb müssen alle zu berücksichtigenden Messdaten immer auch als Rohdaten, also alle verketteten Datensätze in einem Speicher vorgehalten werden, und immer dann, wenn die Straßenkarte zu aktualisieren ist, müssen die alten, bereits berücksichtigten verketteten Datensätze mit den neu hinzugekommenen verketteten Datensätzen erneut mittels eines vorbestimmten Algorithmus verknüpft oder kombiniert werden, um wieder Beschreibungswerte für die Straßenkarte zu erhalten. Dies macht das Aktualisieren oder Aktuell-Halten einer digitalen Straßenkarte sehr speicheraufwendig und rechenintensiv. Ein Beispiel für einen geeigneten Algorithmus ist das sogenannte SLAM-Verfahren (Simultaneous Localization and Mapping, Simultane Positionsbestimmung und Kartenerstellung).

Das Sammeln von Messdaten aus mehreren Kraftfahrzeugen und das Berechnen einer digitalen Straßenkarte auf Grundlage dieser Messdaten ist beispielsweise in der US 2017/0248963 A1 beschrieben. Beschrieben ist, wie eine 3D-Kartographiereinheit aus Graphen-Daten der beschriebenen Art und Messdaten eines LIDAR eine 3D-Straßenkarte einer Umgebung berechnen kann.

Aus der US 2019/0003838 A1 ist ein Verfahren bekannt, um aus Messdaten unterschiedlicher Kraftfahrzeuge eine spurgenaue Straßenkarte zu berechnen.

Aus der CN 109117718 A1 ist bekannt, wie Messwerte einzelner Kraftfahrzeuge zu einem Beschreibungswert kombiniert werden können. Als Messwerte werden hier einzelne Punktmessungen verwendet, so dass die Kombination der Messwerte eine dreidimensionale Punktwolke ergeben, die dann mittels einer statistischen Auswertung zu einem die Messwerte zusammenfassenden Beschreibungswert verrechnet werden.

Die US 6 356 836 B1 offenbart die Erzeugung, das Zusammenführen und das Aktualisieren von Trackingdaten. Die WO 2019/152049 A1 offenbart die Bestimmung eines Fahrzeugpfades auf Basis einer Vielzahl von Eingabedaten.

Der Erfindung liegt die Aufgabe zugrunde, eine digitale Straßenkarte, die auf Messwerten aus Messungen einzelner Kraftfahrzeuge beruht, nachträglich auf Grundlage zusätzlicher Messwerte zu aktualisieren.

Die Aufgabe wird durch die Gegenstände der unabhängigen Patentansprüche gelöst. Vorteilhafte Ausführungsformen der Erfindung sind durch die abhängigen Patentansprüche, die folgende Beschreibung sowie die Figuren beschrieben.

Durch die Erfindung ist ein Verfahren zum Aktualisieren einer digitalen Straßenkarte bereitgestellt. Eine solche Straßenkarte (Englisch: Map) kann ein Modell einer Umgebung darstellen, also den geometrischen Verlauf zumindest einer Straße in der Umgebung beschreiben. Im jeweiligen Bereich der zumindest einen kartographierten Straße sind dabei ortsaufgelöste Beschreibungswerte zumindest einer kartographierten Umgebungseigenschaft enthalten. Eine solche Umgebungseigenschaft kann in der beschriebenen Weise beispielsweise die Umgebungstemperatur oder die Straßenbeschaffenheit (Oberflächeneigenschaft, wie rauh, glatt, sandig, oder Straßenklasse, wie Autobahn, Landstraße) oder eine erreichbare durchschnittliche Fahrgeschwindigkeit oder eine geltende gesetzliche Geschwindigkeitsbegrenzung sein. Die Straßenkarte kann durch Kartendaten oder Map-Daten oder Modelldaten beschrieben sein. Um die Straßenkarte, also die Modelldaten, zu aktualisieren, wird gemäß dem Verfahren durch eine Prozessorschaltung aus zumindest einem messenden Kraftfahrzeug jeweils zumindest ein Graph von verketteten Datensätzen empfangen. Ein solcher Graph verketteter Datensätze beschreibt jeweils eine Fahrt des Kraftfahrzeugs, also die gefahrende oder zurückgelegte Trajektorie des Kraftfahrzeugs. Die Datensätze reihen sich also entlang der gefahrenen Fahrstrecke auf. In jedem Graphen verketteter Datensätze gibt jeder einzelne Datensatz jeweils zu einer Geoposition, die während der Fahrt passiert worden ist, zumindest einen an dieser Geoposition gemessenen oder erfassten Messwert an. Es kann sich hierbei um einen Messwert zu einer bereits kartographierten Umgebungseigenschaft oder einen Messwert zu einer neuen, zusätzlich zu kartographierenden Umgebungseigenschaft handeln. Wann immer also ein Kraftfahrzeug einen Messwert erfasst, kann es diesen zusammen mit Messwerten der Geoposition und beispielsweise der räumlichen Ausrichtung des Kraftfahrzeugs (sogenannte Pose) als einen Datensatz speichern. Werden an derselben Geoposition mehrere Messwerte gemessen (beispielsweise Temperatur und Straßenbeschaffenheit), so können diese Messwerte zusammen mit der Geoposition in einem gemeinsamen Datensatz gespeichert werden. Es kann auch die Geoposition selbst einen Messwert darstellen, wenn es der Straßenverlauf oder Fahrspurverlauf kartographiert werden soll. Die Reihe oder Kette der Datensätze, die zur selben Fahrt gehören, ergeben dann den Graphen verketteter Datensätze.

Um diesen zumindest einen empfangenen Graphen verketteter Datensätze nun in die Modelldaten oder Kartendaten der bereits existierenden Straßenkarte zu integrieren, ist erfindungsgemäß Folgendes vorgesehen.

Durch die Prozessorschaltung wird vor dem Aktualisieren anhand der (bereits verfügbaren) zu aktualisierenden Straßenkarte eine virtuelle Fahrt entlang der zumindest einen (in der Straßenkarte) kartographierten Straße simuliert. Dies wird durchgeführt, indem zu unterschiedlichen virtuellen Geopositionen aus der Straßenkarte ein jeweiliger virtueller Messwert der zumindest einen bereits kartographierten Umgebungseigenschaft ausgelesen oder ermittelt wird. Ein solcher virtueller Messwert kann einem Beschreibungswert aus der Straßenkarte oder einem Interpolationswert aus mehreren der Beschreibungswerte entsprechen. Mit anderen Worten wird also die Straßenkarte abgetastet oder gesampelt, und zwar jeweils an den virtuellen Geopositionen. Diese Geopositionen können mittels eines Algorithmus beispielsweise zufällig ermittelt werden oder gemäß einem vorbestimmten Abtastraster festgelegt sein. Aus den virtuellen Geopositionen und den virtuellen Messwerten kann nun wie bei einer echten Fahrt ein verketteter Datensatz, der die virtuelle Fahrt beschreibt, erzeugt werden. Damit liegt also eine Beschreibung der Straßenkarte vor, die dasselbe Format aufweist wie die neu empfangenen Messwerte realer Fahrten (nämlich Graphen verketteter Datensätze). Die empfangenen verketteten Datensätze der jeweiligen realen oder tatsächlichen Fahrt des zumindest einen Kraftfahrzeugs und die verketteten Datensätze der virtuellen Fahrt werden dann durch die Prozessorschaltung kombiniert, das heißt, es werden also aktualisierte Beschreibungswerte für die zumindest eine Umgebungseigenschaft berechnet. Aus diesen kombinierten Datensätzen wird dann die aktualisierte Straßenkarte berechnet, also beispielsweise wieder die beschriebenen Kartendaten oder Modelldaten erzeugt. Das Kombinieren der verketteten Datensätze und das Berechnen der aktualisierten Straßenkarte können hierbei mit einem herkömmlichen oder bereits bekannten Algorithmus erfolgen, der auch die ursprüngliche zu aktualisierende Straßenkarte erzeugt hat, denn es steht ja auch die Beschreibung der bisherigen Straßenkarte als Graph verketteter Datensätze zur Verfügung, sodass sie wie ein Graph einer realen Fahrt verarbeitet werden kann.

Durch die Erfindung ergibt sich der Vorteil, dass nachträglich in eine bereits vorhandene digitale Straßenkarte neue Messwerte integriert oder eingearbeitet werden können, ohne dass hierzu die ursprünglichen Messwerte noch gespeichert sein müssen oder vorliegen müssen. Dies macht das Aktuell-Halten der Straßenkarte ressourcenschonend, da weder Speicherplatz für die alten, bereits berücksichtigten verketteten Datensätze notwendig ist, noch zum Aktualisieren alle jeweils vorhandenen verketteten Datensätze miteinander verrechnet werden müssen, was mit zunehmenden Messwerten immer mehr werden würde. Die bereits in der Straßenkarte berücksichtigten verketteten Datensätze werden stattdessen als ein verketteter Datensatz einer virtuellen Fahrt repräsentiert.

Die Erfindung umfasst auch Ausführungsformen, durch die sich zusätzliche Vorteile ergeben.

In einer Ausführungsform wird durch die Prozessorschaltung die fertige, aktualisierte Straßenkarte an zumindest ein die Straßenkarte nutzendes Kraftfahrzeug ausgesendet. Somit stehen also in diesem nutzenden Kraftfahrzeug aktualisierte Kartendaten oder Modelldaten zur Verfügung, die in dem jeweiligen Kraftfahrzeug für eine Navigationsassistenz und/oder zum Betreiben einer autonomen Fahrfunktion zur Verfügung stehen oder eingesetzt werden. Somit kann ein Kraftfahrzeug mittels der aktualisierten Straßenkarte geführt oder navigiert werden.

In einer Ausführungsform wird bei dem besagten Kombinieren der verketteten Datensätze (d.h. der Datensätze der virtuellen Fahrt oder der jeweiligen realen Fahrt des zumindest einen Kraftfahrzeugs) ein jeweiliger Gewichtungsfaktor auf die Datensätze angewendet, wobei der jeweilige Wert des Gewichtungsfaktors einen Einfluss des jeweiligen Datensatzes auf die aktualisierte Straßenkarte (also auf die neu zu berechnenden Beschreibungswerte) einstellt oder festlegt. So kann der Wert für den Gewichtungsfaktor der verketteten Datensätze der virtuellen Fahrt größer eingestellt werden als der Wert des Gewichtungsfaktors für die jeweilige reale Fahrt. Hierdurch kann zum Ausdruck gebracht werden, dass die verketteten Datensätze der virtuellen Fahrt eine größere Menge an Messwerten pro Geoposition repräsentieren als durch die realen Fahrten neu hinzukommen. Die Summe der Werte der Gewichtungsfaktoren kann 1 betragen. Es kann auch anders herum vorgesehen sein, dass ein Gewichtungsfakor eines Datensatzes einer realen Fahrt (oder die Summe der Gewichtungsfaktoren der Datensätze mehrerer realer Fahrten) insgesamt einen größeren Wert erhält als der Gewichtungsfaktor eines Datensatzes der virtuellen Fahrt. Dies kann beispielsweise vorgesehen sein, wenn ein Signal vorliegt, dass sich eine Veränderung in der Umgebung ergeben hat, beispielsweise ein geänderter Straßenverlauf detektiert oder signalisiert wird. Signalisieren beispielsweise mehr als eine vorbestimmte Mindestanzahl an Graphen verketteter Datensätze, dass die von dem zugehörigen Kraftfahrzeug zurückgelegte Trajektorie signifikant von dem Verlauf oder der Geometrie der bisher kartographierten Straßen abweicht, so kann dies als Hinweis oder Signal auf einen geänderten Straßenverlauf interpretiert werden und die Werte der Gewichtungsfaktoren angepasst oder verändert werden, damit der Gewichtungsfaktor für die neuen verketteten Datensätze größer ist als für die verketteten Datensätze der virtuellen Fahrt (bisherige Kartendaten). Was als signifikant bewertet wird, kann der Fachmann durch ein vorbestimmtes Signifikanzkriterium festgelegen.

Erfindungsgemäß wird die aktualisierte Straßenkarte berechnet, indem aus den Messwerten und den zugeordneten Geopositionen (aller verfügbaren verketteten Datensätze) aktualisierte, ortsaufgelöste Beschreibungswerte der jeweils durch die Messwerte beschriebenen Umgebungseigenschaft berechnet werden. Beispielsweise können für die einzelnen Geopositionen die dort verfügbaren Messwerte zusammengefasst werden oder die Messwerte aus vorbestimmten Regionen, beispielsweise von Flächenbereichen mit einer Größe im Bereich von 10 m² bis 100 m², können zu einem Beschreibungswert zusammengefasst werden.

Beim Zusammenfassen der Messwerte wird erfindungsgemäß als jeweiliger Beschreibungswert ein Mittelwert der Messwerte berechnet, die dieser Geoposition zugeordnet werden, weil sie beispielsweise an dieser Geoposition gemessen wurden oder in einer vorbestimmten Region um diese Geoposition herum gemessen wurden (beispielsweise in der besagten Fläche zwischen 10 m² bis 100 m²). Der Beschreibungswert kann auch ein statistischer Beschreibungswert sein, in dem aus den verfügbaren Messwerten eine statistische Verteilung derselben berechnet wird und daraus der jeweilige Beschreibungswert berechnet wird, beispielsweise als der wahrscheinlichste Wert gemäß der ermittelten statistischen Verteilung. Hierbei kann man einen Form der Verteilung berücksichtigen, z.B. eine Bimodalität (Verteilung mit zwei Maxima) oder allgemein eine Multimodalität (Verteilung mit mehreren Maxima).

Erfindungsgemäß wird die Straßenkarte anhand von zeitlich nacheinander empfangenen verketteten Datensätze iterativ aktualisiert, also mehrmals nacheinander. Mit anderen Worten wird das Aktualisieren der Straßenkarte nicht nur einmalig anhand von zumindest einem empfangenen Graphen verketteteter Datensätze durchgeführt, sondern es stehen mehrmals nacheinander Graphen verketteter Datensätze zur Verfügung, und es wird die Aktualisierung dann jeweils erneut durchgeführt. Hierdurch kann die Straßenkarte im laufenden Betrieb, das heißt während die Prozessorschaltung nutzende Kraftfahrzeugen mit den Modelldaten der Straßenkarte versorgt, aktuell gehalten werden.

In einer Ausführungsform werden durch die Prozessorschaltung bereits berücksichtigte verkettete Datensätze realer Fahrten gelöscht. Mit anderen Worten werden also die bereits in der Straße berücksichtigten verketteten Datensätze realer Fahrten nicht aufgehoben, wodurch sie ansonsten Datenspeicher belegen oder blockieren würden. Vielmehr kann die Prozessorschaltung mit weniger Speicher auskommen, da die bereits berücksichtigten verketteten Datensätze in der Straßenkarte, das heißt in den Modelldaten oder Kartendaten, durch die Beschreibungswerte repräsentiert sind und durch das Erzeugen verketteter Datensätze der virtuellen Fahrt ein Ersatz für verkettete Datensätze realer Fahrten geschaffen werden kann.

Um das erfindungsgemäße Verfahren durchzuführen, ist die beschriebene Prozessorschaltung vorgesehen. Diese stellt ebenfalls einen Bestandteil der Erfindung dar. Die erfindungsgemäße Prozessorschaltung weist zumindest einen Mikroprozessor auf, der mit einem Datenspeicher gekoppelt ist, in welchem Programminstruktionen gespeichert sind, die bei Ausführen durch den zumindest einen Mikroprozessor diesen veranlassen, eine Ausführungsform des erfindungsgemäßen Verfahrens durchzuführen. Die Prozessorschaltung kann als eine Server des Internets oder als Servercluster oder Servercloud ausgestaltet sein.

Schließlich gehört zu der Erfindung auch ein computerlesbares Speichermedium mit einem Programmcode oder Programminstruktionen, die dazu eingerichtet sind, bei Ausführen durch eine Prozessorschaltung diese zu veranlassen, eine Ausführungsform des erfindungsgemäßen Verfahrens durchzuführen. Das Speichermedium kann beispielsweise als eine Festplatte oder ein Flash-Speicher oder als CD-ROM oder DVD ausgestaltet sein.

Die beschriebenen messenden und die beschriebenen nutzenden Kraftfahrzeuge sind jeweils bevorzugt als Kraftwagen, insbesondere als Personenkraftwagen oder Lastkraftwagen, oder als Personenbus oder Motorrad ausgestaltet.

Die Erfindung umfasst auch Implementierungen, in denen jeweils eine Kombination mehrerer der beschriebenen Ausführungsformen realisiert ist.

Im Folgenden sind Ausführungsbeispiele der Erfindung beschrieben. Hierzu zeigt:
- Fig. 1: eine Skizze zur Veranschaulichung eines bekanntes Algorithmus zum Erzeugen von Modelldaten einer Straßenkarte aus verketteten Datensätzen, wie er erfindungsgemäß genutzt werden kann;
- Fig. 2: eine Skizze zur Veranschaulichung eines Graphen verketteter Datensätze; und
- Fig. 3: eine schematische Darstellung einer Ausführungsform der erfindungsgemäßen Prozessorschaltung.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden. Daher soll die Offenbarung auch andere als die dargestellten Kombinationen der Merkmale der Ausführungsformen umfassen. Des Weiteren sind die beschriebenen Ausführungsformen auch durch weitere der bereits beschriebenen Merkmale der Erfindung ergänzbar.

In den Figuren bezeichnen gleiche Bezugszeichen jeweils funktionsgleiche Elemente.

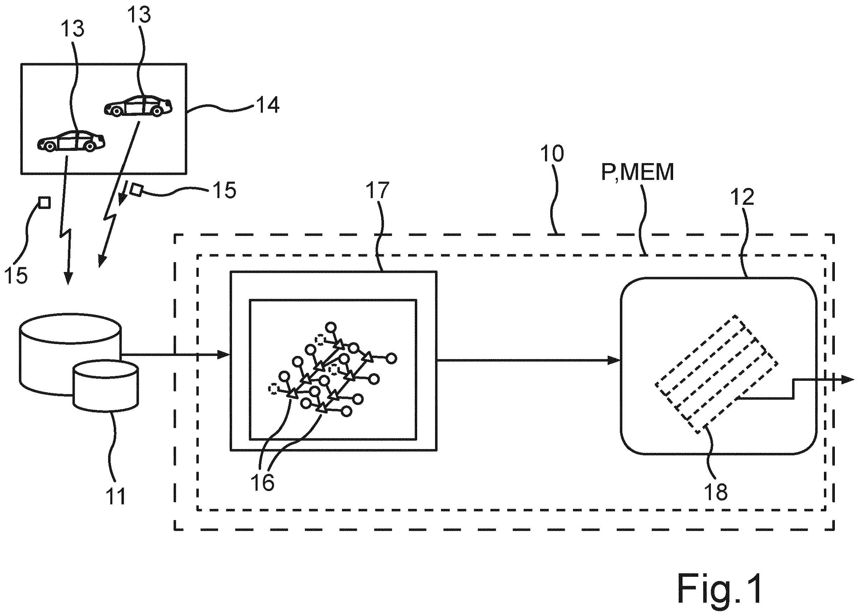

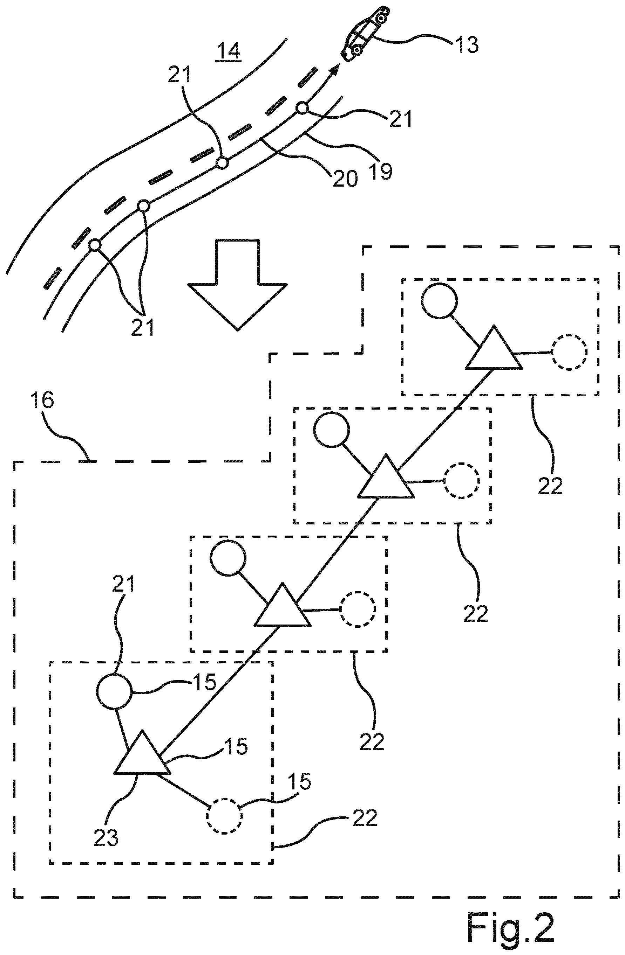

Fig. 1 zeigt eine Prozessorschaltung 10, die beispielsweise in einem Server des Internets bereitgestellt und z.B. durch ein Rechenzentrum realisiert sein kann. Die Prozessorschaltung 10 kann auf einem oder mehreren Mikroprozessoren (sogenannten CPUs - Central Processing Units) beruhen. Mittels der Prozessorschaltung 10 kann aus Sensordaten 11 eine digitale Straßenkarte 12 berechnet werden. Die Sensordaten 11 kann die Prozessorschaltung 10 aus Kraftfahrzeugen 13 empfangen, die sich in einem Straßennetz einer Umgebung 14 befinden können und dort Messwerte 15 zu zumindest einer Umgebungseigenschaft der Umgebung 14, beispielsweise die aktuelle Temperatur und/oder eine Straßenbeschaffenheit und/oder eine Position von Fahrspuren der jeweiligen Straße, beschreiben können. Die Messwerte 15 sind durch die Sensordaten 11 repräsentiert. Die Messwerte 15 einer Fahrt eines jeden der Kraftfahrzeuge 13 können jeweils insgesamt zu einem Graphen 16 aus verketteten Datensätzen zusammengefasst sein, was im Weiteren noch im Zusammenhang mit Fig. 2 näher erläutert werden wird.

Die Prozessorschaltung 10 kann auf zumindest einem Mikroprozessor P und einem damit gekoppelten Datenspeicher MEM beruhen, welcher für die hier beschriebenen Verfahrensschritte Programminstruktionen enthalten kann.

Mittels eines an sich aus dem Stand der Technik bekannten Algorithmus 17 kann in an sich bekannter Weise aus solchen Graphen 16 verketteter Datensätze die Straßenkarte 12 berechnet werden, das heißt, es kann aus den Messwerten 15 insgesamt die Straßenkarte 12 in einem Datenformat berechnet werden, wie es durch ein vorgegebbares Datenformat festgelegt werden kann. Es kann beispielsweise ein Straßenformat eines Kartenanbieters gewählt werden, der die Straßenkarte 12 nutzen möchte. Eine solche Straßenkarte 12 kann beispielsweise Fahrspurverläufe und/oder Mittellinienverläufe und/oder Fahrspurbegrenzungen und/oder Landmarken beschreiben. Eine örtliche Verteilung zumindest einer Umgebungseigenschaft kann in der Straßenkarte durch Beschreibungswerte beschrieben sein.

Fig. 2 veranschaulicht noch einmal die Struktur der Messwerte 15 in den Graphen 16. Dargestellt ist, wie in der Umgebung 14 ein Kraftfahrzeug 13 entlang einer Straße 19 eine Fahrt 20 durchführen kann. Die Straße 19 soll in der Straßenkarte 12 kartographiert werden. Entlang der Fahrstrecke oder Straße 19 kann das Kraftfahrzeug 13 während der Fahrt 20 in an sich bekannter Weise mit einer bordeigenen Sensorschaltung an unterschiedlichen Geopositionen 21 jeweils die Geoposition 21 selbst messen und optional zumindest einen weiteren Messwert 15 (siehe auch Fig. 1) . Die Messung der Geoposition 21 selbst kann auch einen Messwert 15 im Sinne der Erfindung darstellen.

Aus den Messwerten 15 kann nun ein Graph 16 aus verketteten Datensätzen 22 gebildet werden. Jeder Datensatz 22 repräsentiert dabei die Messung oder das Messergebnis an einer der Geopositionen 21. Hier kann der Datensatz 22 beispielsweise Messdaten zu einer Pose 23 des Kraftfahrzeugs 13, wie es sie in der Geoposition 21 innehatte, eine Messung der Geoposition 21 selbst, beispielsweise ausgedrückt als Koordinaten eines GNSS (Global Navigation Satellite System), beispielsweise des GPS (Global Positioning System), beschreiben. Zusätzlich kann ein Messwert 15 optional beispielsweise auch aus einem anderen Sensor des Kraftfahrzeugs 13 enthalten sein, beispielsweise ein Temperaturwert und/oder ein Luftqualitätswert und/oder ein Helligkeitswert, nur um Beispiele zu nennen. In Fig. 2 ist der Übersichtlichkeit halber nur ein Datensatz 22 vollständig mit Bezugszeichen versehen. Durch die zeitliche Abfolge, in welcher das Kraftfahrzeug 13 die Geopositionen 21 nacheinander passiert hat, ergibt sich die Ordnung oder Abfolge der Datensätze 22 im Graphen 16. Ein solcher Graph 16 kann durch Sensordaten 11 repräsentiert sein und durch die Prozessorschaltung 10 aus dem Kraftfahrzeug 13 empfangen werden (beispielsweise über eine Internetverbindung) und zusammen mit weiteren Graphen 16 weiterer Fahrten und/oder weiterer Kraftfahrzeuge durch die Prozessorschaltung 10 in der beschriebenen Weise mittels des Algorithmus 17 in die Modelldaten 18 für die Straßenkarte 12 umgerechnet werden. Hierbei werden dann die einzelnen Messwerte zusammengefasst oder kombiniert, um daraus Beschreibungswerte der Straße 19 und/oder einer weiteren Umgebungseigenschaft oder Umwelteigenschaft zu erhalten, die beispielsweise eine parametrierte Linie oder ein anderes Format, wie es an sich bekannt ist, darstellen. Die einzelnen Messwerte 15 sind dann nicht eigentlich mehr notwendig für die Straßenkarte 12.

Der im Zusammenhang mit Fig. 1 beschriebene, an sich aus dem Stand der Technik bekannte Algorithmus 17 muss nur in der Lage sein, auf Basis von Rohdaten, also den Graphen 16 mit den verketteten Datensätzen oder eben auf Grundlage der Messwerte 15 eine Straßenkarte 12 zu berechnen. Liegt bereits eine fertige Straßenkarte 12 vor, so kann aber konsequenter Weise mittels des Algorithmus 17 allein in diese Kartendaten oder diese Modelldaten 18 der Straßenkarte 12 keine weitere zusätzliche neue Information aus zu einem späteren Zeitpunkt empfangenen Messwerten 15 integriert werden.

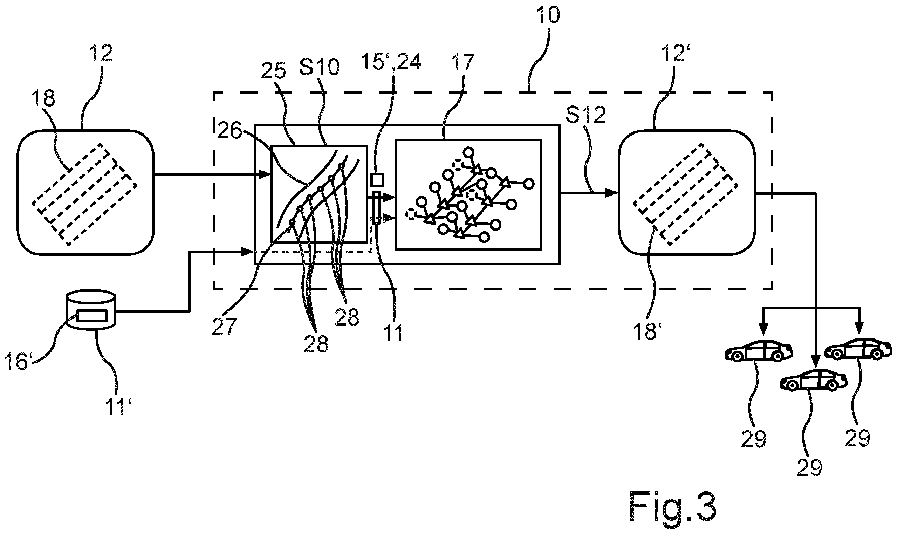

Fig. 3 veranschaulicht, wie nun ausgehend von den Modelldaten 18 der Straßenkarte 12 (bereits vorhandene Beschreibungsdaten) eine aktualisierte Straßenkarte 12' mit aktualisierten Modelldaten 18' berechnet werden kann, wenn neue zusätzliche Sensordaten 11' mit zusätzlichen Graphen 16' verketteter Datensätze, also zusätzliche Messwerte, eintreffen oder empfangen werden.

Hierzu muss der Algorithmus 17 selbst nicht angepasst oder verändert werden. Vielmehr kann die Prozessorschaltung 10 die Graphen 16' verwenden und diese mit künstlich erzeugten virtuellen Messwerten 15' kombinieren, die zu einem Graphen 24 zusammengefasst sind, der in derselben Weise wie der in Fig. 2 beschriebene Graph 16 strukturiert sein kann, sich also von seiner Datenstruktur nicht von den neu empfangenen Graphen 16' unterscheiden muss. Hierzu kann die Prozessorschaltung 10 in einem Schritt S10 ein Simulationsmodul 25 betreiben, welches auf der Grundlage der bereits vorhandenen Straßenkarte 12, also deren Modelldaten 18 mit den darin enthaltenen Beschreibungswerten, auf den bereits kartographierten Straßen 26 eine virtuelle Fahrt 27 simulieren kann, indem zu unterschiedlichen virtuellen Geopositionen 28 jeweils zumindest ein künstlicher Messwert 15', also eine virtuelle Messung, vorgenommen oder erzeugt wird. Das Simulationsmodul 25 kann ein Computerprogramm sein. Der jeweilige künstliche Messwert 15' beschreibt dabei den jeweiligen in den Modelldaten 18 der Straßenkarte 12 hinterlegten oder beschriebenen Beschreibungswert der jeweiligen Umgebungseigenschaft, die bereits in der Straßenkarte 12 kartographiert ist. Es kann auch die beschriebene Interpolation vorgesehen sein.

Somit ergeben sich künstliche Messwerte 15', die in der in Fig. 2 beschriebenen Weise zu einem Graphen 16 verketteter Datensätze zusammengefasst werden können. Damit weisen auch diese künstlich erzeugten Graphen 24 die Struktur auf, wie sie auch ein Kraftfahrzeug 13 auf einer realen Fahrt erzeugen kann. Für den Algorithmus 17 ergibt sich somit kein Unterschied zwischen neuen Informationen und den bereits kartographierten Informationen, und es können in einem Schritt S11 die Graphen 24 und die neu empfangenen Graphen 16' gemeinsam durch den Algorithmus 17 gleich verarbeitet werden, wodurch die Modelldaten 18' der aktualisierten Straßenkarte 12' erzeugt werden. Es ist hierzu nicht nötig, die ursprünglich zugrunde gelegten Graphen 16 (siehe Fig. 1) gespeichert zu halten. Diese können nach Erzeugen der ersten Version der Straßenkarte 12 aus der Prozessorschaltung 10 gelöscht werden.

Die Straßenkarte 12 und die aktualisierte Straßenkarte 12' können jeweils nach ihrer Fertigstellung in einem Schritt S12 zumindest einem nutzenden Kraftfahrzeug bereitgestellt werden. Somit können iterativ oder wiederholt aus Kraftfahrzeugen 13 Messwerte 15 empfangen werden, diese durch die Prozessorschaltung 10 iterativ oder nacheinander verarbeitet werden und jeweilige aktualisierte Straßenkarten 12' an nutzende Kraftfahrzeuge ausgegeben oder übertragen werden. Somit kann ein kontinuierliches oder schrittweises Update der Straßenkarte 12 in den nutzenden Kraftfahrzeugen auf Grundlage von messenden Kraftfahrzeugen 13 durchgehend betrieben oder ermöglicht werden. Damit können die nutzenden Kraftfahrzeuge 29 mit den messenden Kraftfahrzeugen 13 über die Prozessorschaltung 10 gekoppelt sein und stufenweise oder schrittweise mit aktualisierten Modelldaten 18' einer Straßenkarte 12' versorgt werden.

Die ergibt eine Möglichkeit für viele Fahrzeughersteller, Kartenmaterial mit eigenen Beobachtungen des Fahrzeugsensorsets (Sensorschaltungen der messenden Kraftfharzeuge) zu erstellen, aktuell zu halten bzw. Veränderungen einzupflegen, um z.B. eine neue Version einer Basiskarte zu erstellen. Die Beobachtungen aus dem Sensorumfeld werden in einem Verarbeitungsschritt in eine Graphen-Repräsentation gewandelt. Für die Navigationsunterstützung in nutzenden Kraftfahrzeugen muss die einzupflegende Information jedoch in einem Format vorliegen, welches von der berechnenden Instanz der Basiskarte (zu aktualisierende Straßenkarte) interpretiert werden kann. Der bewährte Kartierungsprozess ist Fig. 1 zu entnehmen. Dieser Prozess ist als Ausgangslage der im folgenden beschriebenen Idee anzunehmen.

Um das Modell dieser Basiskarte zu generieren, ist die Verarbeitung der Fahrzeugsensorinformationen unterschiedlicher Herkunft (z.B. unterschiedliche Fahrzeughersteller, Derivate, um nur Beispiele zu nennen) in dem zu berechnenden Kartenabschnitt notwendig. Dieser Umstand ist der Korrespondenzsuche geschuldet, welche die Grundlage darstellt, Identitätsfaktoren zwischen den hinzukommenden Informationen zu bestimmen. Dabei muss auf nun nicht mehr auf eingefahrene Datensätze oder Submengen dieser wiederkehrend zurückgegriffen werden. Dies spart ein enormes Ressourcenaufkommen (Speicher, RAM sowie CPU-Last). Zudem ist ein massiver Rechen- und Zeitaufwand verhindert, welcher für die Lösung der Korrespondenzsuche und des Optimierungsproblems (SLAM-Verfahren) aufzuwenden gilt. Außerdem ist aus datenschutzrechtlicher Sicht die Zweckgebundenheit personenbeziehbarer Informationen berücksichtigt, da nach initialer Verarbeitung ein Löschen des betroffenen Datensatzes möglich ist.

Um Rechen-, Zeit-, Ressourcen- und Komplexitätsaufwand zu minimieren, wird eine Wandlung der bereits bestehenden berechneten Initialkarte (eigene generierte Karten oder von Drittanbietern) in eine Graphen-Repräsentation vorgesehen. Das Vorgehen beschreibt, wie aus einer Basiskarte als Input virtuelle Observationen und/oder Ego-Posen erstellt werden können, welche die Grundlage für virtuelle Fahrten darstellen. Nachfolgend werden diese Variablen in eine Graphenstruktur überführt. Dieser Graph beinhaltet somit bereits prozessierte und/oder optimierte virtuelle Fahrten. Die entsprechenden Prozessschritte können Fig. 3 entnommen werden.

Auf Basis dieser Idee können neue Sessions (Daten einer hinzukommenden Aufzeichnungsfahrt) einzeln und direkt prozessiert werden, was die Korrespondenzsuche und die nachgelagerte Graph-Optimierung signifikant beschleunigt und somit Ressourcen enorm schont. Zudem könnten die Rohdaten nach der Verarbeitung mit dem Gesamtgraphen gelöscht werden, da sie für eine erneute Berechnung eines Kartenmodells nicht mehr notwendig sind.

Wie bereits beschrieben, werden die virtuellen Graphvariablen aus einem importierten Kartenmodel generiert. Die generierten Variablen werden bervorzugt während der Graphoptimierung fixiert. Somit ist das generierte Modell als Ground-Truth zu betrachten. Es ist besonders vorteilhaft, darauf zu achten, dass ein hinreichender Informationsgehalt eines generierten Graphen für die jeweilige Korrespondenzsuche vorhanden ist. Für die Generierung können die folgenden Elemente bzw. Schritte genutzt werden:
- Import von Referenz Kartenmodell nach Datenstruktur der berechnenden Instanz/Bibliothek;
- Interpolation von Polyline-Geometrien im Falle von fortlaufenden Objekten wie Linienzügen (geradlinige Beobachtungen bestehen nur aus sehr wenigen Stützpunkten, sodass hier nun Beschreibungswerte zu zusätzlichen virtuellen Geopositionen erzeugt werden);
- Berechnung von virtuellen Ego-Posen durch das Sampling eines Referenzpfades;
- Berechnung von virtuellen beobachteten Objekten;
- Verknüpfung von virtuellen Ego-Posen mit zugehörigen Objekten.

Insgesamt zeigen die Beispiele, wie durch die Erfindung eine Wandlung eines Kartenmodells in eine Graphen-Repräsentation realisiert werden kann.

## Patentansprüche

1. Verfahren zum Aktualisieren einer digitalen Straßenkarte (12), welche zu zumindest einer kartographierten Straße (26) jeweils ortsaufgelöste Beschreibungswerte zumindest einer kartographierten Umgebungseigenschaft enthält, wobei, um die Straßenkarte (12) zu aktualisieren, durch eine Prozessorschaltung (10) aus zumindest einem messenden Kraftfahrzeug (13) jeweils zumindest ein Graph (16, 16') verketteter Datensätze (22), die eine jeweilige reale Fahrt (20) des Kraftfahrzeugs (13) beschreiben, empfangen wird, wobei in jedem Graphen (16, 16') verketteter Datensätze (22) jeder einzelne Datensatz (22) zu einer Geoposition (21), die während der Fahrt (20) passiert wurde, zumindest einen an dieser Geoposition (21) erfassten Messwert (15) zu einer neuen oder bereits kartographierten Umgebungseigenschaft angibt,
wobei durch die Prozessorschaltung (10) vor dem Aktualisieren anhand der bereits verfügbaren, zu aktualisierenden Straßenkarte (12) eine virtuelle Fahrt (27) entlang der zumindest einen kartographierten Straße (26) simuliert wird (S10), indem zu unterschiedlichen virtuellen Geopositionen (28) aus der Straßenkarte (12) ein jeweiliger virtueller Messwert (15') der zumindest einen in der Straßenkarte (12) bereits kartographierten Umgebungseigenschaft ermittelt wird, wobei ein solcher virtueller Messwert (15) einem Beschreibungswert aus der Straßenkarte (12) oder einem Interpolationswert aus mehreren der Beschreibungswerte entspricht, und zu den virtuellen Geopositionen (28) aus den virtuellen Messwerten (15') ein verketteter Datensatz (24), der die virtuelle Fahrt (27) beschreibt, erzeugt wird, und die empfangenen verketteten Datensätze (22) der jeweiligen realen Fahrt (20) des zumindest einen Kraftfahrzeugs (13) und die verketteten Datensätze (24) der virtuellen Fahrt (27) kombiniert werden (S11) und aus den kombinierten Datensätzen die aktualisierte Straßenkarte (12') berechnet wird (S12), wobei die aktualisierte Straßenkarte (12') berechnet wird, indem aus den Messwerten (15, 15') und den zugeordneten Geopositionen (21, 28) der verketteten Datensätze (22) der jeweiligen realen Fahrt und der verketteten Datensätze (24) der virtuellen Fahrt aktualisierte, ortsaufgelöste Beschreibungswerte der jeweils durch die Messwerte (15, 15') beschriebenen Umgebungseigenschaft berechnet werden,
wobei an einer jeweiligen Geoposition (21, 28) ein Mittelwert der Messwerte (15, 15'), die dieser Geoposition zugeordnet werden, weil sie an dieser Geoposition oder in einer vorbestimmten Region um diese Geoposition herum gemessen wurden, berechnet wird oder eine statistische Verteilung der Messwerte (15, 15') und daraus der jeweilige Beschreibungswert ermittelt wird, und
wobei die Straßenkarte (12) anhand von zeitlich nacheinander empfangenen verketteten Datensätzen (22) iterativ aktualisiert wird.

2. Verfahren nach Anspruch 1, wobei durch die Prozessorschaltung (10) die aktualisierte Straßenkarte (12') an zumindest ein die Straßenkarte (12') nutzendes Kraftfahrzeug (29) ausgesendet wird.

3. Verfahren nach einem der vorhergehenden Ansprüche, wobei beim Kombinieren der verketteten Datensätze (22) ein jeweiliger Gewichtungsfaktor auf die Datensätze (22) angewendet wird.

4. Verfahren nach einem der vorhergehenden Ansprüche, wobei durch die Prozessorschaltung (10) bereits berücksichtigte verkettete Datensätze (22) realer Fahrten (20) gelöscht werden.

5. Prozessorschaltung (10) mit zumindest einem Mikroprozessor (P) und mit einem Datenspeicher (MEM), in welchem Programminstruktionen gespeichert sind, die bei Ausführen durch den zumindest einen Mikroprozessor (P) diesen veranlassen, ein Verfahren nach einem der vorhergehenden Ansprüche durchzuführen.

6. Speichermedium (MEM) mit einem Programmcode, der dazu eingerichtet ist, bei Ausführen durch eine Prozessorschaltung (10) diese dazu zu veranlassen, ein Verfahren nach einem der Ansprüche 1 bis 4 durchzuführen.

## Claims

1. Method for updating a digital road map (12) which contains, for at least one mapped road (26), respective spatially resolved description values of at least one mapped environment property, wherein, in order to update the road map (12), in each case at least one graph (16, 16') of concatenated data sets (22) describing a respective real journey (20) of the motor vehicle (13) is received by a processor circuit (10) from at least one measuring motor vehicle (13), wherein in each graph (16, 16') of concatenated data sets (22) each individual data set (22) specifies, for a geoposition (21) that was passed during the journey (20), at least one measurement value (15) recorded at this geoposition (21) for a new or already mapped environment property, wherein
a virtual journey (27) along the at least one mapped road (26) is simulated (S10) by the processor circuit (10) before updating on the basis of the road map (12) which is already available and is to be updated, by a respective virtual measurement value (15') of the at least one environment property already mapped in the road map (12) being determined for different virtual geopositions (28) from the road map (12), wherein such a virtual measurement value (15) corresponds to a description value from the road map (12) or to an interpolation value from a plurality of the description values, and at the virtual geopositions (28) a concatenated data set (24) which describes the virtual journey (27) is produced from the virtual measurement values (15'), and the received concatenated data sets (22) of the respective real journey (20) of the at least one motor vehicle (13) and the concatenated data sets (24) of the virtual journey (27) are combined (S11) and the updated road map (12') is calculated (S12) from the combined data sets, wherein the updated road map (12') is calculated by calculating, from the measurement values (15, 15') and the associated geopositions (21, 28) of the concatenated data sets (22) of the respective real journey and the concatenated data sets (24) of the virtual journey, updated, spatially resolved description values of the respective environment property described by the measurement values (15, 15'),
wherein at a respective geoposition (21, 28) an average value of the measurement values (15, 15') associated with this geoposition because they were measured at this geoposition or in a predetermined region around this geoposition is calculated or a statistical distribution of the measurement values (15, 15') and therefrom the respective description value is determined, and
wherein the road map (12) is iteratively updated based on concatenated data sets (22) received sequentially in time.

2. Method according to claim 1, wherein the updated road map (12') is transmitted by the processor circuit (10) to at least one motor vehicle (29) that is using the road map (12').

3. Method according to any one of the preceding claims, wherein in combining the concatenated data sets (22) a respective weighting factor is applied to the data sets (22).

4. Method according to any one of the preceding claims, wherein concatenated data sets (22) of real journeys (20) that have already been taken into account by the processor circuit (10) are deleted.

5. Processor circuit (10) comprising at least one microprocessor (P) and a data memory (MEM) in which program instructions are stored which, when executed by the at least one microprocessor (P), cause it to carry out a method according to any one of the preceding claims.

6. Storage medium (MEM) comprising program code adapted, when executed by a processor circuit (10), to cause the processor circuit to carry out a method according to any one of claims 1 to 4.

## Revendications

1. Procédé d'actualisation d'une carte routière numérique (12) qui contient pour au moins une route (26) cartographiée respectivement des valeurs de description à résolution spatiale au moins d'une propriété d'environnement cartographiée, dans lequel afin d'actualiser la carte routière (12), respectivement au moins un graphique (16, 16') de jeux de données (22) concaténés est reçu par un circuit de processeur (10) d'au moins un véhicule automobile (13) effectuant la mesure, lesquels décrivent un trajet (20) réel respectif du véhicule automobile (13), dans lequel dans chaque graphique (16, 16') des jeux de données (22) concaténés, chaque jeu de données (22) individuel relatif à une position géographique (21) qui a été passée pendant le trajet (20), indique au moins une valeur de mesure (15) détectée au niveau de cette position géographique (21) relative à une propriété d'environnement nouvelle ou déjà cartographiée, dans lequel
un trajet (27) virtuel le long d'au moins une route (26) cartographiée (S10) est simulé par le circuit de processeur (10) avant l'actualisation à l'aide de la carte routière (12) à actualiser, déjà disponible, en ce qu'une valeur de mesure (15') virtuelle respective d'au moins une propriété d'environnement déjà cartographiée dans la carte routière (12) est déterminée pour des positions géographiques (28) virtuelles différentes à partir de la carte routière (12), dans lequel une telle valeur de mesure (15) virtuelle correspond à une valeur de description à partir de la carte routière (12) ou une valeur d'interpolation de plusieurs des valeurs de description, et un jeu de données (24) concaténé qui décrit le trajet virtuel (27) est généré pour les positions géographiques (28) virtuelles à partir des valeurs de mesure (15') virtuelles, et les jeux de données (22) concaténés reçus du trajet (20) réel respectif d'au moins un véhicule automobile (13) et les jeux de données (24) concaténés du trajet virtuel (27) sont combinés (S11) et à partir des jeux de données combinés, la carte routière (12') actualisée est calculée (S12), dans lequel la carte routière (12') actualisée est calculée, en ce qu'à partir des valeurs de mesure (15, 15') et des positions géographiques (21, 28) associées des jeux de données (22) concaténés du trajet réel respectif et des jeux de données (24) concaténés du trajet virtuel, des valeurs de description actualisées à résolution spatiale, de la propriété d'environnement décrite respectivement par les valeurs de mesure (15, 15') sont calculées,
dans lequel dans une position géographique (21, 28) respective, une valeur médiane des valeurs de mesure (15, 15') qui sont associées à cette position géographique, parce qu'elles ont été mesurées dans cette position géographique ou dans une région prédéterminée autour de cette position géographique, est calculée ou une distribution statistique des valeurs de mesure (15, 15') et à partir de celle-ci la valeur de description respective est déterminée, et
dans lequel la carte routière (12) est actualisée de manière itérative à l'aide de jeux de données (22) concaténé reçus temporellement les uns après les autres.

2. Procédé selon la revendication 1, dans lequel la carte routière (12') actualisée est envoyée à au moins un véhicule automobile (29) utilisant la carte routière (12') par le circuit de processeur (10).

3. Procédé selon l'une quelconque des revendications précédentes, dans lequel lors de la combinaison des jeux de données (22) concaténés, un facteur de pondération respectif est appliqué aux jeux de données (22).

4. Procédé selon l'une quelconque des revendications précédentes, dans lequel des jeux de données (22) concaténés de trajets (20) réels déjà pris en compte par le circuit de processeur (10) sont supprimés.

5. Circuit de processeur (10) avec au moins un microprocesseur (P) et avec une mémoire de données (MEM), dans laquelle des instructions de programme sont enregistrées, lesquelles incitent l'au moins un microprocesseur (P) lors de la réalisation par celui-ci à réaliser un procédé selon l'une quelconque des revendications précédentes.

6. Support de mémoire (MEM) avec un code de programme qui est conçu afin d'inciter un circuit de processeur (10) lors de la réalisation par celui-ci à réaliser un procédé selon l'une quelconque des revendications 1 à 4.
